# EUROPEAN PATENT SPECIFICATION

(11) **EP 1 413 099 B1**
(45) Date of publication and mention of the grant of the patent: **27.07.2005**
(21) Application number: 02780926.8
(22) Date of filing: 25.04.2002
(51) Int. Cl.: H04L 12/56

(54) **A METHOD FOR TRANSMITTING APPLICATION PACKET DATA**
VERFAHREN ZUM SENDEN VON ANWENDUNGSPAKETDATEN
PROCEDE D'EMISSION DE DONNES D'APPLICATION PAR PAQUETS

(30) Priority: 29.06.2001 DE 10131561
(43) Date of publication of application: 28.04.2004
(73) Proprietor: Nokia Corporation, 02150 Espoo (FI)
(72) Inventor: HAUMONT, Serge, FIN-00320 Helsinki (FI); HURTTA, Tuija, FIN-02660 Espoo (FI); AXERUD, Bo, FIN-00600 Helsinki (FI); REICHLER, Thomas, FIN-00670 Helsinki (FI)
(74) Representative: Leson, Thomas Johannes Alois, Dipl.-Ing.
(86) International application number: PCT/IB2002/003883
(87) International publication number: WO 2003/003652

(56) References cited:
- WO-A-00/76230
- WO-A-00/78080
- WO-A-99/16266
- INA WIDEGREN: "Architectural principles" 3GPP ALL IP WORKSHOP, [Online] 7 February 2000 (2000-02-07), pages 1-19, XP002222228 Nice, France Retrieved from the Internet: <URL:http://www.3gpp.org/ftp/workshop/Arch ive/0002IP/Docs/PDF/AIP-000004.pdf> [retrieved on 2002-11-25]
- KHARE R: "Effect Considered Harmful" -, 9 April 1999 (1999-04-09), XP002901534

## Description

### FIELD OF THE INVENTION

The present invention concerns a method for transmitting application packet data via a first packet data network between a terminal and a second packet data network. Also, the present invention concerns accordingly adapted terminals and gateway network nodes.

### BACKGROUND OF THE INVENTION

Recently, information technology as such and also information technology in connection with communication networks has made substantial progress. In particular, communication networks have been developed which allow mobile communication for moving users and/or terminals. Current developments tend to adopt packet switched network architectures. In general, packet switched networks are adapted for communicating data in units of packets. Examples for such packet data networks are the Internet or the GPRS network (GPRS = General Packet Radio Service) as an example of a mobile packet data network.

Subsequently, the present invention will be described with reference to such a GPRS network as an example. Of course, the chosen example is not intended to be limiting for the present invention and other networks different from the GPRS network may likewise be adapted to the present invention, i.e., the present invention is suitable to be implemented in various packet data networks. For example, GPRS networks are known to exist in parallel to GSM networks (GSM = Global Standard of Mobile Communication) as well as in parallel to UMTS networks (UMTS = Universal Mobile Telecommunication System). GSM networks are also referred to as 2G (2^{nd} generation networks) whereas UMTS networks are also referred to as 3G (3^{rd} generation networks).

Typically, application packet data are transmitted via a first packet data network such as a GPRS network between a terminal also referred to as mobile station MS and a second packet data network such as for example the Internet. The terminal MS may but need not be constituted by two components: a mobile terminal allowing mobile and/or wireless communication with the first packet data network (e.g. GPRS network) and a terminal equipment such as a personal computer / laptop or any other suitable data processing means connected to the mobile terminal. The interface between the terminal MS and for example the GPRS packet data network is referred to as Um or Uu interface in case of a GSM or UMTS network, respectively. Furthermore, the interface between the GPRS packet data network as a first packet data network and for example the Internet as a second packet data network is referred to as Gi interface. Note that the term "interface" as used herein may also be referred to as reference point in some standards of ETSI (ETSI = European Telecommunication Standards Institute). A user using his terminal for data transmission runs an application on his terminal generating application data to be transmitted. These application data are transmitted as packetized data. Such application packet data are transmitted using an application protocol. An application protocol is operated on top of a protocol stack, which protocol stack comprises plural individual stacked protocol layers adopted for such a transmission within a packet data network.

Data transmission between a sending end and a receiving end relies on the OSI reference model (OSI = Open System Interconnection). As is generally known, the OSI reference model splits the communication process between a sending and receiving end into seven independent layers. Layers of the same hierarchy at the sending and the receiving end share a common protocol, while a certain layer at one end also shares a protocol with the layers immediately above and below it for interlayer connection. However, the highest layer (layer 7, application layer) does not require to know any particulars of the lowest layer, layer 1, the physical layer. As the OSI reference model is expected to be known to those skilled in the art, a more detailed explanation thereof is considered to be dispensable in the present application.

For example, at the sending end, when represented by the mobile station and/or the terminal, the protocol layers according to GSM are stacked, from the lower layer to the upper layer, as follows: GSM RF Layer (radio frequency layer), MAC/RLC (media access control/radio link control), LLC (logical link control), SNDCP (subnetwork dependent convergence protocol), which all together form the packet domain bearer. Correspondingly, in a UMTS mobile station, the protocol stack at the terminal is L1, MAC/RLC, PDCP (packet data control protocol), which in summary form the packet domain bearer for UMTS (see also ETSI TS 129061 V.3.4.0 of September 2000, pages 10 and 11).

On top of the packet domain bearer, a further protocol layer such as IP/X.25 (Internet protocol) may be run, on top of which in turn the application is stacked. Thus, in a packet data network such as the GSM GPRS network, the flow of user data is from the application layer at the mobile station via the protocol stacks (in "vertical direction") downwards to the layer 1, from there via the base station subsystem BSS (radio network subsystem RNS according to UMTS) via the SGSN (serving GPRS support node (3G SGSN in UMTS)) to the gateway GPRS support node GGSN (3G GGSN in UMTS). The data flow from MS, BSS, SGSN, GGSN is in "horizontal direction", and at the GGSN, the data flow in turn will become "vertical" from layer 1 over layer 2, IP, UDP/TCP, GTP, IP/X.25. At the GGSN, the application packet data are about to leave the first packet data network, e.g. towards a second packet data network and/or are forwarded in a similar but reverse sequence to a receiving end (UDP/TCP = user datagram protocol/transmission control protocol, GTP = GPRS tunneling protocol).

On the application layer, applications are run. Examples for such applications are the wireless application protocol WAP, the session initiation protocol SIP, the real time protocol RTP, digital packet data DPD signaling or the like.

For a particular user, wishing to run and/or running an application, a so called context is defined. Such a context is for example known as PDP context (PDP = packet data protocol). A PDP context is defined by the PDP type, the address (of the user, i.e. the terminal), and certain quality of service requirements for said application (QoS).

It is to be noted that various applications currently known and/or even those to be developed can profit from the present invention as to be described hereinafter. Nevertheless, in order to keep the description simple and not confusing, the specification will focus on the wireless application protocol WAP and the session initiation protocol SIP as specific examples for applications.

It should be noted that tunneling technology are well known in the Internet. They consist in sending a packet addressed to one tunnel end point, the tunnel end point will remove the lower transmission protocol and determine that the content of the packet needs to be transmitted to another node; and forward the packet.

In GPRS as well as in UMTS, there is a limitation that a PDP context containing the same address has to have the same PDP type. Namely, according to ETSI specifications, the secondary PDP context activation procedure may only be initiated after a PDP context is already activated for the same PDP address and APN (access point name). It is to be noted that the PDP address in terms of the used coding includes the PDP type. In addition, for certain services/applications such as WAP and/or SIP signaling, discovering the address of the application server is not easy. For WAP service, today the IP address of the WAP Gateway is preconfigured in the MS. For VoIP as foreseen by 3GPP, additional signaling is needed to allow the MS to discover the local SIP proxy (i.e. CSCF)IP address.
Also, some network operators want to force the subscriber to use the network operator's own services (proxy server, gateway server). This implies that a restriction (such as FW (firewall), uplink filter such as TFT (traffic flow template)) is introduced concerning a location within the network, where the user may connect to the network for certain services. A current proposal for VoIP (voice over IP) in 3GPP (3^{rd} generation partnership project) resides in using a dedicated signaling PDP context with a new function in the GGSN to screen a destination address of packet data sent from this destination address and limit it to using uplink filters such as traffic flow templates (TFTs) only to an allowed one and/or to allowed ones.

Currently, WAP is carried over GPRS using IP/UDP. Likewise, SIP is planned to be sent and/or is sent over IP/UDP. With reference to WAP, this means that with every WAP packet (from 3 to 200 octets) an IP/UDP header (of 28 octets) is added for transmission over the radio (path) and the backbone. In addition, one IP address needs to be allocated for every WAP user, and this IP header needs to be processed in the mobile station, i.e. the terminal.
Although the IP header can be compressed over the radio interface, this cannot be effected over the backbone. Currently, header compression or other header adaptations such as header stripping is implemented as the radio access network functionality. UTRAN (UMTS terrestrial radio access network) uses header compression, whereas GERAN (GPRS enhanced radio access network) uses header stripping. In addition, IP header compression requires some additional processing in the terminal MS as well as in 2G/3G SGSN and/or the radio network controller RNC.

Apparently, due to overheads and/or headers additionally to be transmitted, delays in applications such as WAP over GPRS and/or SIP over GPRS are rather significant. In particular for voice over IP signaling (VoIP), delays of call set up is critical, so that delays should be minimized for WAP and/or SIP implementations over GPRS.

WO 99/16266-A discloses packet data transmission between a terminal via a first packet data network and a second packet data network where the service type is detectable and distinguishable.

The different problems identified such as delay, need to find out application server address and uplink restrictions can be improved or solved with the invention described below.

### SUMMARY OF THE INVENTION

Hence, it is an object of the present invention to provide a method for transmitting application packet data via a first packet data network between a terminal and a second packet data network which removes above mentioned drawbacks inherent to the known methods and/or systems. Furthermore, it is an object of the present invention to provide accordingly adapted terminals and network nodes for carrying out the method according to the present invention.

According to the present invention, the above object is for example achieved by a method for transmitting application packet data via a first packet data network between a terminal and a second packet data network, said application packet data being transmitted using an application protocol operated on top of a protocol stack, said protocol stack comprising plural individual stacked protocol layers adopted for said transmission within said first packet data network, wherein said application packet data are addressed to the terminal and distinguishable according to a service type implemented for said terminal using said application, the method comprising the steps of: detecting said service type, and dependent on the transmission direction of said application packet data, removing and/or adding at least one of said plural individual protocol layers for a specific one of detected service type.

According to advantageous further developments of the method according to the present invention
- removing and/or adding at least one of said plural individual protocol layers is accomplished by removing and/or adding header information related to said respective protocol layer;
- removing / adding at least one of said plural individual protocol layers is effected at a gateway node of said first packet data network to said second packet data network;
- in downlink transmission from said second packet data network towards said terminal, said at least one of said plural individual protocol layers is removed, and in uplink transmission from said terminal towards said second packet data network, said at least one of said plural individual protocol layers is added;
- adding / removing at least one of said plural individual protocol layers is effected at said terminal communicating via said first packet data network with said second packet data network;
- in downlink transmission terminating at said terminal, said at least one of said plural individual protocol layers is added, and in uplink transmission originating at said terminal, said at least one of said plural individual protocol layers is removed;
- The service type is indicated by the terminal to the gateway node
- the service type of an application is distinguishable from a context defined for said terminal and application;
- a context (e.g. PDP context) definition comprises service type, address information of a terminal for which said service is implemented, a quality of service definition, and possibly filter information, application type information, destination address and type of header to be added/removed.
- If different applications in the terminal share the same address (as seen by second network), the gateway map downlink packets to the appropriate context using a filter mechanism (e.g. TFT)
- Protocol headers to be added are determined from said context and/or configured information.

Still further, according to the present invention, the above object is for example achieved by a gateway node of first packet data network, said gateway node being adapted to transmit application packet data between a terminal connectable to said first packet data network and a second packet data network connectable to said packet data network, said application packet data being transmitted using an application protocol operated on top of a protocol stack, said protocol stack comprising plural individual stacked protocol layers adopted for said transmission within said first packet data network, wherein said application packet data addressed to the terminal and are distinguishable according to a service type implemented and/or indicated, respectively, for said terminal using said application, said gateway node comprising detection means adapted to detect said service type, and selection means adapted to selectively remove and/or add at least one of said plural individual protocol layers dependent on the transmission direction of said application packet data, for a specific one of detected service type.

According to advantageous further developments of the gateway node:
- said selection means is adapted to remove and/or add header information related to said respective protocol layer;
- said selection means is adapted to remove said at least one of said plural individual protocol layers in downlink transmission from said second packet data network towards said terminal, and to add said at least one of said plural individual protocol layers in uplink transmission from said terminal towards said second packet data network;
- said selection means is adapted to add Protocol headers based on information from said context and/or configured information.
- said detection means is adapted to distinguish the service type of an application from a context defined for said application;
- said detection means is adapted to select the appropriate context using a filter mechanism if different applications in the terminal share the same address (as seen by second network)
- a context definition comprises service type, address information of a terminal for which said service is implemented, a quality of service definition, and possibly filter information, destination address, application type information and type of header to be added/removed.

In addition, according to the present invention, the above object is for example achieved by a terminal connectable to a first packet data network and adapted to transmit application packet data via said first packet data network to a second packet data network connectable to said first packet data network and to receive application packet data via said first packet data network from said second packet data network, said application packet data being transmitted using an application protocol operated on top of a protocol stack, said protocol stack comprising plural individual stacked protocol layers adopted for said transmission within said first packet data network, wherein said application packet data are distinguishable according to a service type implemented for said terminal using said application, said terminal comprising detection means adapted to detect said service type, activation means to establish a connection to a gateway node and selection means adapted to selectively remove and/or add at least one of said plural individual protocol layers dependent on the transmission direction of said application packet data, for a specific one of detected service type.

According to advantageous further developments of the terminal:
- said selection means is adapted to remove and/or add header information related to said respective protocol layer;
- said selection means is adapted to add said at least one of said plural individual protocol layers in downlink transmission terminating at said terminal, and to remove said at least one of said plural individual protocol layers in uplink transmission originating at said terminal;
- said detection means is adapted to distinguish the service type of an application from a context defined for said application;
- said detection means is adapted to select the appropriate context if different applications in the terminal share the same address (as seen by second network)
- said activation means is adapted to establish one or many contexts in a gateway node
- a context definition comprises service type, address information of a terminal for which said service is implemented, a quality of service definition, and possibly filter information, destination address, application type information and type of header to be added/removed.

Accordingly, with the method and/or network node and/or terminal according to the present invention, overheads and delays are reduced and transmission is thus optimized. Also, a need for IP header compression in the radio network is removed.

Furthermore, for traffic requiring the use of particular application server, a need for discovery of an external application server such as a CSCF (call state control functional entity) of the second network is suppressed. The gateway node (based on its configuration) sends all uplink traffic to appropriate server as defined by the operator. This also suppress the possibility for the terminal to choose its destination address, so the need of uplink restriction in the gateway node I removed. By virtue of the present invention, the usage of SIP and/or WAP directly over the packet domain bearer (for a specific service type) can be achieved, with advantages as follows:
- less overhead over radio interface and backbone (especially since IPv6 is the mandatory protocol in 3GPP standards)
- faster delivery of messages
- avoiding uplink traffic flow templates in GGSN
- allowing different charging (due to the use of the service type parameters that can be inserted in Charging record)
- reduction of processing in the mobile station terminal as one of the sources of delay which is even more significant if (previously) IP header compression had to be used
- reduction of overhead gained capacity in the backbone and/or over the radio interface; IP header compression can be used over the radio interface but not over the backbone (Iu and Gn interfaces) (note that in any case the first headers are sent uncompressed, so for example the IP headers of a bi-directional SIP registration would not be compressed).

With particular reference to WAP the gain is partly in transmission speed in the order of 20 to 25 ms per WAP packet (28 x 8 bit/ 10 kbit/s = 22 ms) so that if WAP transmission requires four iterations, the gain is about 100 ms. The gain is partly reducing the probability of retransmission. If a packet is sent with two radio link control layer blocks instead of three, the probability of having one of the blocks corrupted decreases. This is less significant, if IP header compression is used (overhead is then 2 to 4 octets). Also, the terminal mobile station could be more simple as it could have its WAP application run straight over GPRS/UMTS protocols (similarly to operating them over SMS (Short Message Service)). Less processing would then be required from the mobile station terminal. Also, a WAP gateway address would not be needed to be configured in the mobile station terminal. In an alternative implementation of a gateway node such as a GGSN, the benefits reside in less addresses needed for WAP users in the GGSN, a simpler WAP gateway node since the MSISDN (mobile station integrated service digital network number) could be added to WAP in an extension header instead of being stored in the WAP gateway.

### BRIEF DESCRIPTION OF THE DRAWINGS

The present invention will be more readily understood when read in conjunction with the accompanying drawings, in which
Fig. 1 shows a protocol stack in connection with the present invention for a SIP application;
Fig. 2 shows a protocol stack in connection with the present invention used for a WAP application;
Fig. 3 shows a signaling preceding an application level registration according to current standards, which signaling could be simplified by virtue of the present invention;
Fig. 4 shows an example of an implementation of a mobile station terminal according to the invention in terms of the protocol stack implemented;
Fig. 5, comprising table 1 and table 2, illustrates an example for allocation of a separate value representing a PDP type for a special type of service;
Fig. 6 shows a signaling for PDP context activation.

### DETAILED DESCRIPTION OF THE EMBODIMENTS

Embodiments of the present invention will now be described with reference to the accompanying drawings.

Generally, according to the present invention, an activation of a secondary context having a different PDP-type to be requested is allowed, as in this preferred embodiment PDP type is used to indicate service type. The GGSN will accept such a secondary context if it has the required capability (i.e. proper selection means are implemented), and otherwise will reject them. Also, when implementing the proposed method according to the present invention to the GGSN as a packet data network node, i.e. a gateway node, the GGSN performs, in downlink direction, header removal, and header addition in uplink direction for data packets belonging to this secondary PDP context. A secondary PDP context has thus to be regarded as a specific service type implemented with an application such as WAP and/or SIP. Thus, the particular secondary context will use a different PDP-type over GPRS/UMTS.

In terms of a terminal such a mobile station, in general, removing and or adding header information related to protocol layers is not necessary. More precisely, a terminal sending in uplink direction may send WAP (or SIP) signaling directly over the packet domain bearer layer, and may in downlink direction directly receive the corresponding SIP/WAP packets. However, a terminal supporting plural types of services (service type requiring the use of IP/UDP for example) may be adapted to switch between different protocol stacks implemented in the mobile station depending on the service type to be used and/or processed. Thus, when switching from a protocol stack with IP/UDP protocol layers to a protocol stack without these layers, also a mobile station terminal could be regarded as selectively removing and/or adding such protocol layers. In a specific case, where a mobile terminal is separated from another terminal equipment such as a laptop or personal computer, also the mobile station as the combination of the terminal equipment and the mobile terminal performs header removal in uplink and/or header addition in downlink for data packets belonging to a secondary PDP context as a specific service type.

Basically, according to the invention, if it is not desired to allow the user to use networking capability provided by the IP protocol layer within the protocol stack, then for this particular context, the IP protocol layer is removed from the stack. By virtue thereof, reduction of overhead and speeding up services is introduced. Also, an implementation of a particular restriction is made unnecessary.

Stated in other words, according to the present invention it is not always such that a SIP stack is used without IP, which would restrict the application and/or service provided for the user. Rather, this is done only selectively for special services such as voice over IP (VoIP) signaling in 3GPP UMTS, which benefit from a special treatment such as no charging, automatic CSCF selection, and can be subscribed or not. This may be achieved by adding a new PDP-type as a service type such as "SIP signaling for VoIP" to the subscriber data kept in the home location register HLR (according to GSM) and/or the home subscriber server HSS (according to UTMS). Accordingly, a user may still have basic IP access, use SIP on top of IP transparently, but will not benefit from a special treatment.

The invention is applicable when the traffic of this secondary PDP context is sent to a destination address under the control of the network operator. Such a destination address may identify a WAP gateway or a SIP proxy server. Also, the present invention is applicable for SIP signaling (for voice over IP) as well as WAP traffic. Nevertheless, these services are not intended to be limiting for the present invention, and other service types may likewise be applied in connection with the present invention.

In particular, in a more generic embodiment of the invention, that the Gateway node does not need to have configured information about a service type, but only need to add and remove headers as defined by the context sent by the terminal. For example, in a context associated with an RTP flow, the terminal could indicate in the context header to be added/removed (e.g. Ipv6/UDP), and information needed to create the header (port number; IP destination address,...). The GGSNcould add/remove header without RTP related knowledge.

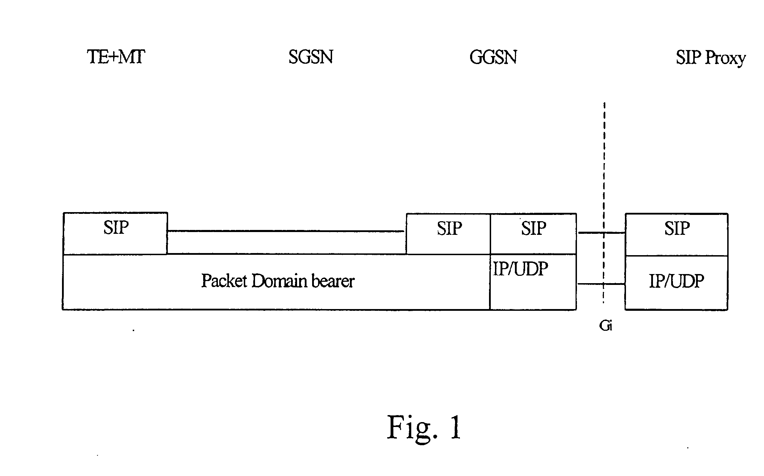

Fig. 1 graphically shows the protocol stacks of involved networks nodes and the terminal when implementing the present invention. Fig. 1 illustrates this for SIP being carried directly over 3G GPRS (UMTS). That is, if a SIP proxy server (e.g. CSCF) sends SIP traffic involving IP/UDP protocol layer via the interface Gi between the SIP proxy and the GGSN, the SIP traffic is received at the GGSN including the IP/UDP layer as indicated in Fig. 1. Upon processing the received IP/UDP/SIP traffic, the GGSN detects the service type of the traffic (based on filter information contained in the PDP context) and, in downlink direction, removes upon detection the IP/UDP protocol layer from the protocol stack. Consequently, the GGSN forwards the SIP traffic directly on top of the packet domain bearer, transparently for the SGSN (SGSN only relay the traffic), to the terminal, i.e. the mobile station including terminal equipment and mobile terminal. Likewise, when receiving SIP traffic transmitted from the mobile station terminal in uplink direction transparently over the SGSN to the GGSN, the GGSN detects the specific service type, and adds the IP/UDP protocol layer thereto, in order that the SIP traffic with IP/UDP is forwarded over Gi interface towards the SIP proxy. SIP proxy address and type of header to be added (IPv6/UDP) are known from configuration by the GGSN.

Note that Fig. 1 shows the situation for the specific service type. For example, the terminal equipment and mobile terminal may comprise service type specific protocol stacks, one of which is to be selected depending on the service type to be implemented and/or used for transmission. In 3GPP, there is a requirement that the operator should be able to force the user to use the operator's own SIP proxy server. This may be achieved by removing the "network layer", i.e. IP/UDP layer. This solution avoids restricting destination of the user traffic (using uplink traffic flow templates TFT) and performing CSCF discovery, as GGSN takes care of finding a suitable call state control functional entity CSCF within the second packet data network, and unnecessary overhead (IPv6 and UDP) is saved over the backbone as well as over the radio interface.

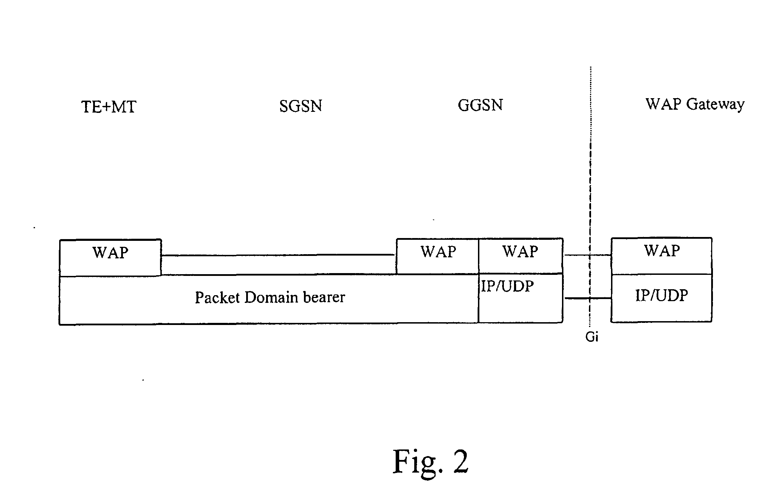

Fig. 2 shows a similar scenario of a protocol layer stack as shown in Fig. 1. The difference therebetween resides in that Fig. 2 shows the protocol layer stack for WAP as an application directly carried over the packet domain bearer instead of SIP. Thus, substantially the same description as given in connection with Fig. 1 holds for Fig. 2. Only SIP has to be replaced by WAP.

In order to enable detection and selection of adding / removing of a protocol layer from the stack at the GGSN for example, a new PDP-type is defined, specifying the specific service for which the present invention is to be applicable.

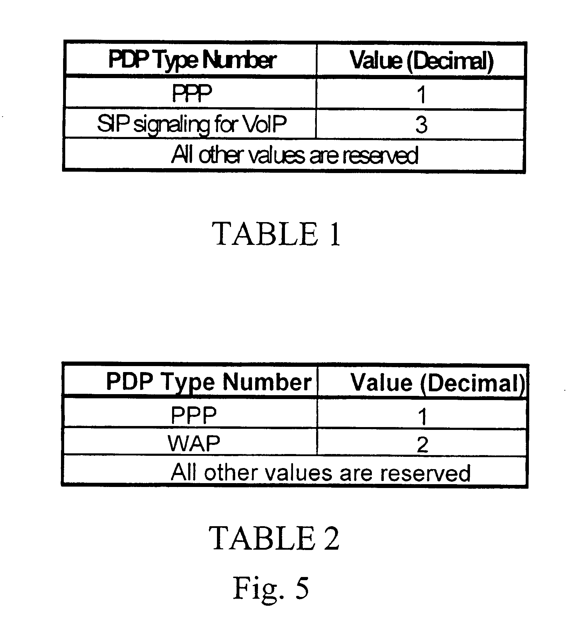

An example of such a new PDP-type definition is shown in Fig. 5:
Table 1 applies to the case of Fig. 1 dealing with SIP applications being carried on top of the packet domain bearer layer;
Table 2 of Fig. 5 is applicable to the case of Fig. 2 dealing with WAP application being carried on top of the packet domain bearer layer.

As shown in table 1 of Fig. 5, a new PDP-type is added to the GPRS/UMTS specification for example as an ETSI PDP-type. Likewise, table 2 of Fig. 5 shows a new PDP-type added to GPRS/UMTS specification as an ETSI PDP-type.

Optionally, WAP as a service type could be added as PPP DLL protocol numbers (point-to-point-protocol data link layer) which is faster than in 3GPP. As a benefit, the extra UDP/IP header could be removed also from the convergence sublayer CS, and WAP could be sent straight over PPP (point-to-point-protocol). Thus, with the new PDP-types being defined, a mobile station terminal may request a PDP context with PDP-type "SIP signaling for voice over IP" and/or "WAP", while on the other hand a GGSN may detect such a PDP context indicating a specific service. The IP address (as seen by the second network) allocated for this PDP context can also be used for other IP traffic using other context. This is the case when different PDP context with different PDP type use same IP address. It should be noted that these new PDP types apply to both primary and secondary context.

If they are used on a primary PDP context, the GGSN needs to determine the type of address (e.g. IPv4 or IPv6) to be allocated to the terminal. In the case of SIP signaling where 3GPP mandates the use of IPv6, it could be based on GGSN configuration.

In a preferred implementation, the terminal signal during the PDP context activation procedure not only the service type (e.g. WAP), but also the type of address requested (e.g. IPv6). This is not necessary in a secondary PDP context activation, as the address of the primary context is automatically used, even if service type might be different. If PDP type is used to indicate the service type, a new field could be used to indicate the type of address.

However, it should be noted that in an alternative embodiment other codings should be used. For example, A new field could be added to indicate service type, while PDP type could be used to indicate the type of address. It should be noted that one of the novelty of the invention is that the protocol transported over the packet domain bearer (i.e. first network), is different than the protocol used by the application network (i.e. second network) to address the terminal. That is why the field PDP type previously identifying both protocols may in the invention be used to indicate one or the other protocol.

Concerning downlink user data transfer, as generally mentioned already earlier above, the GGSN checks if the received packet is a WAP/IP/UDP packet (and/or SIP/IP/UDP packet in case of Fig. 1). If so, the IP/UDP header is removed and the packets are forwarded as a part of WAP PDP context (or SIP VoIP context). This check could advantageously but need not necessarily be performed by checking the UDP port. If the above-mentioned check is negative, the IP packets are forwarded normally as a part of one of the existing PDP contexts for this IP address. Alternatively, in such a case, they might also be discarded.

It is to be noted that the selection of the PDP context uses the existing traffic flow template mechanism. However, in connection with the present invention, the traffic flow template is not required to be sent by the mobile station terminal, as WAP uses a well-known port. So the traffic flow template TFT is locally known by the GGSN.

Although herein before the present invention has been described with the focus on WAP and/or SIP signaling, this is not limiting for the present invention. Other protocols may be carried directly over the packet domain bearer such as RTP (real time protocol) or VoIP traffic or TCP (transmission control protocol) (for example, when all TCP traffic must use a TCP proxy for wireless optimization).

Also, the protocol stack on which the present application is applicable need not be limited to the one described earlier herein before. For example, the present invention is similarly applicable to an access server connected to the mobile station via a convergence sublayer CS connection. In this case, the stack layers are from bottom to top CS/PPP/IP/UDP/WAP. Thus, upon removing of IP/UDP, WAP would be carried directly on CS/PPP.

In connection with Fig. 2, it has to be noted that the GGSN may know the WAP gateway's IP address from its configuration. This avoids the need of configuring the WAP gateway IP address into the mobile station terminal. Alternatively, the WAP gateways IP address (or its logical name) is sent as a part of the PDP context activation procedure. In this case, the GGSN will be adapted to store it and use it as the destination address for all packets. By virtue of this feature, the mobile station terminal is enabled to select the WAP gateway to be used.

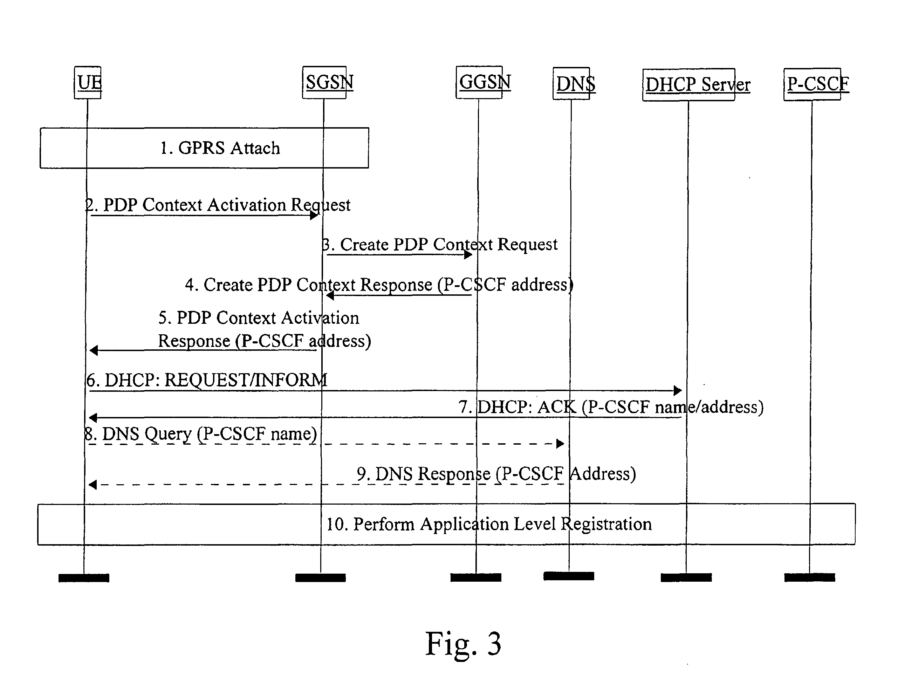

Fig. 3 shows a context activation procedure according to the current working assumption in 3GPP. Fig. 3 represents in horizontal direction the devices and network entities involved, while in vertical direction the sequence of steps and transmitted messages is represented. In step 1, a user equipment as a 3G terminal performs a GPRS attach procedure with a serving GPRS support node SGSN. Thereafter, in step 2, the user equipment UE forwards a PDP context activation request to the SGSN. In response thereto, in Step 3, the SGSN forwards to a gateway GPRS support node GGSN a create PDP context request. In a subsequent step 4, the GGSN returns a create PDP context response including a proxy call state control functional entity's address to the SGSN. Note that a Proxy call state control functional entity is denoted as P-CSCF. The SGSN as the serving GPRS support node forwards in step 5 this PDP context activation response including the P-CSCF address to the user equipment. In step 6, If the P-CSCF address was not received by the SIP application (e.g. SIP application may be in a separate laptop), the user equipment forwards a DHCP: request/inform message towards a DHCP server (DHCP = dynamic host configuration protocol). The thus addressed server in step 7 returns a DHCP: ACK (P-CSCF name/address) acknowledgment message to the user equipment. The user equipment in step 8 in turn issues a DNS query including the name of the P-CSCF to the domain name system server DNS. His domain name system server DNS returns in step 9 a DNS response including the address of the P-CSCF to the user equipment. Thereafter, in step 10, the user equipment performs an application level registration with the call state control functional entity P-CSCF. This signaling is the signaling as presently discussed in standardization.

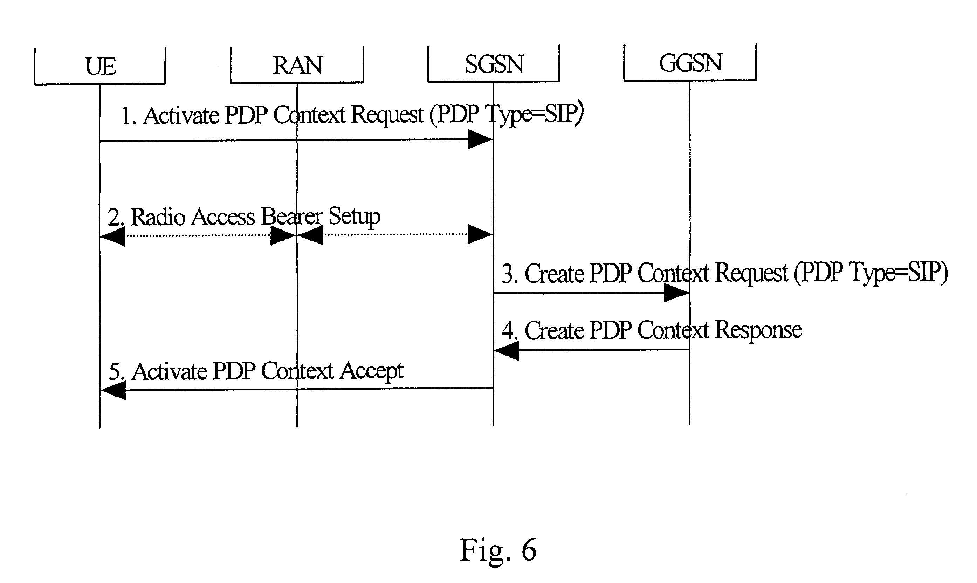

However, with the present invention being implemented, this signaling would be simplified: no P-CSCF address in PDP context activation response would be required, which saves 16 octets of transmitted data, and steps 6 to 9 are not needed (these steps could be provided for in case the terminal is divided in two components, i.e. a computer such as a laptop separate from a mobile station terminal, as mentioned earlier). Fig. 6 shows such a simplified signaling scenario which can be achieved with the present invention being implemented. Likewise, in horizontal direction the equipment and network entities involved are represented, while in vertical direction the interchanged messages as sequentially transmitted are illustrated. As shown, in the signaling there are involved a user equipment UE as a 3G terminal, a radio access network RAN comprising (not shown) Node_B's and radio network controllers RNC, and the SGSN and GGSN as part of the core network. The terminal, i.e. user equipment or mobile station requests a PDP context with the PDP type "SIP signaling for VoIP". It is to be noted that although this description is given with reference to the example of "SIP", the same signaling may be applied in case of the PDP type "WAP" or any other of the above mentioned PDP types usable in connection with the present invention. In addition, optionally the type of address requested and/or may also be inserted in this request. In a more generic embodiment of the invention, information defining how to add and remove headers (such as destination address, application type information and type of header to be added/removed) may be inserted as well. This request is forwarded in step 1 as an activate PDP context request from the user equipment via the radio access network to the SGSN. The SGSN checks that the PDP type requested (service type) is allowed by the subscription for the user equipment. This check is performed by querying the data kept in the home location register (2G) or the home subscriber server (3G). If allowed, the SGSN creates a PDP context to a GGSN supporting SIP PDP type (or WAP PDP type, or the like). Before creating this, in step 2, the radio access bearer is set up between the user equipment and the SGSN via the radio access network. Then, in step 3, the SGSN forwards the above mentioned create PDP context request to the gateway GPRS support node GGSN, which in step 4 returns to the SGSN a create PDP context response. Then, step 5, the SGSN sends an activate PDP context accept message via the RAN to the user equipment UE.

Stated in other words, the user equipment initiates PDP context activation and indicates with the PDP type "SIP signaling for VoIP" and/or "WAP" that the PDP context is a signaling PDP context. This context is in this example a primary context. Then, the radio access bearer is set up. The SGSN selects the GGSN supporting the PDP type indicated, and the SGSN sends the create PDP context request message to the selected GGSN. The message includes the PDP type SIP signaling for voice over IP. The GGSN creates the PDP context. Also, the GGSN resolves the Proxy CSCF address from its configuration data (for example APN configuration, APN = access point name). Then, the GGSN sends the create PDP context response message to the SGSN, and the SGSN sends the activate PDP context accept message to the terminal (user equipment and/or mobile station).

After the signaling of the PDP context activation, the terminal has a PDP context suitable for communication with the call state control functional entity CSCF (not shown in Fig. 6). This context will be used only for SIP signaling (or WAP signaling, respectively) which will always go to the Proxy CSCF selected by the GGSN.

In case of a terminal comprising two components such as a laptop computer separated from the mobile terminal part, a SIP protocol stack is implemented on a laptop. Then, the laptop sends SIP signaling over IP with a dummy pre-configured destination address. The mobile station part removes the IP/UDP header and forwards the SIP signaling message directly on top of the radio access bearer stack.

The SGSN and the GGSN include the PDP type "SIP signaling for VoIP" in the call detail records (CDR) which they create for the signaling PDP context. This enables the operator to charge call control signaling differently from other traffic. If a new field is used to indicate service type, this field should as well be included in the CDR.

When a voice over IP (VoIP) call is initiated, a real time RT secondary PDP context needs to be activated. This secondary PDP context has then different PDP type such as for example Ipv6 or RTP.

Subsequently, the present invention will be described with a focus on possible implementations for the GGSN as a gateway node. It is to be noted that in case of SIP packets / WAP packets being received on top of TCP/IP, the gateway node such as a GGSN has the following alternatives:
- forwarding the SIP TCP message over a PDP context using PDP type TCP,
- forwarding the SIP TCP IP message over a PDP context using PDP type IPv6,
- discarding the packet,
- sending a TCP acknowledgment back,
- removing the IP/TCP header and forwarding the SIP message over a PDP context using the PDP type SIP signaling for voice over IP.

Again, it has to be noted that SIP or WAP may be carried as service types and/or applications, so that although the description may focus on one of SIP or WAP, it is of course possible that this applies also to the other one of SIP or WAP. Bearing this in mind, GGSN implementations will now be described with reference to WAP packets as an example. Note that in case WAP packets are concerned, a WAP gateway as part of the second packet data network is involved, whereas in case SIP packet data is concerned, a Proxy CSCF also referred to as SIP Proxy is involved for the second packet data network.

### First GGSN implementation:

When receiving the PDP context request, the GGSN allocates (internally or from DHCP; RADIUS (DHCP = dynamic host configuration protocol, RADIUS = remote authentication dial-in user)) one IP address for the PDP context. The GGSN informs a WAP gateway (or a database the WAP gateway can query) of the mapping between the IP address and the terminal's identity (represented for example by the MSISDN, and/or the IMSI) using for example the RADIUS protocol, which is implemented in the GGSN. Note that the IP address of the WAP gateway is pre-configured in the GGSN as part of the access point name APN configuration.

A distinction has to be made between downlink user data transfer and uplink user data transfer.

For downlink user data transfer, the WAP gateway behaves normally. This means, it sends a WAP packet to the GGSN on top of UDP/IP protocol layers (as schematically represented in Fig. 2). However, the GGSN removes UDP/IP and relays the WAP information directly over GTP (GPRS tunneling protocol) and forwards the GTP packets to the proper SGSN. If the received packets were not a WAP/UDP/IP packet, the GGSN can be implemented to have one of the above mentioned alternative options, for example, to discard the packets. This would the case if the filter information (e.g. TFT) indicates that this packet does not belong to any PDP context. The SGSN and radio network merely relay the packets to the terminal, and they SGSN are not required to understand this new protocol. When the terminal (mobile station or user equipment) receives the packet belonging to the WAP PDP context, the mobile station terminal sends this packet to its internal WAP application layer.

For uplink user data transfer, the mobile station terminal sends the packet straight over the "packet domain layer" (which means in 2G (GSM) up to SNDCP = subnetwork dependent convergence protocol, whereas in 3G (UMTS) this means up to PDCP = packet data convergence protocol on top of radio link control RLC). The SGSN merely relays the packet to the GGSN. The GGSN detects the PDP context from the GTP header sent by SGSN and adds the appropriate header. The information to create the appropriate header is taken from the PDP context (source address is MS PDP address), and from configuration information (destination address is a configured WAP gateway address, UDP with static port number is always used by WAP application). Then GGSN forwards the packet in a UDP/IP packet to the WAP gateway as the destination of the datapacket transfer. The destination address is the IP address of the WAP gateway, while the source address is the IP address allocated for this PDP context.

In a more generic embodiment of the invention, information defining how to add and remove headers (such as destination address, port information and type of header to be added/removed) is taken only from the PDP context. It avoids the need of configuration information in GGSN for every service type.

It is to be noted that one improvement resides in enabling the GGSN to spread the traffic load over many WAP gateways. It can be used by storing the latest source address used to send downlink packets, which replaces a dedicated load sharing solution where several WAP gateways are accessed through the same IP address.

Likewise, in case of SIP, an improvement resides in enabling the GGSN to spread the load over many Proxy CSCF for example by having a logical name, to which is associated a list of Proxy CSCF. In this case, for every PDP context, the IP address of the Proxy CSCF selected is stored.

### Second GGSN implementation:

A second GGSN implementation is now described. In this implementation, the GGSN uses the same IP address for plural or even all WAP PDP contexts. Note that a proprietary header field in the WTP (wireless transaction protocol) messages is used here for subscriber identification in uplink as well as in downlink direction. The WAP gateway IP address is pre-configured in the GGSN as part of the access point name APN configuration.

For downlink user data transfer, the WAP gateway needs to add the same MSISDN (mobile station ISDN number) or alias name to the header of each WTP message. The GGSN removes UDP/IP protocol layer, uses the MSISDN or alias name to find out to which PDP context (that is mobile station terminal) the packets are to be sent. Then it removes this optional WTP header and relays the WAP information (or SIP information) directly over GTP (GPRS tunneling protocol) and forwards the GTP packets to the proper SGSN. Also here, if the received packets were not WAP/UDP/IP packets, the GGSN may discard the packets as one of the options mentioned earlier. The SGSN merely relays the packets to the mobile station terminal (the SGSN has no need to understand this new protocol). When the mobile station terminal receives these packets belonging to the WAP PDP context, the mobile station terminal sends these packets to its internal WAP application layer.

For uplink user transfer, the mobile station terminal sends a packet straight over the "packet domain layer" (SNDCP = subnetwork dependent convergence protocol for 2G (GSM), or PDCP packet data convergence protocol on top of RLC radio link control for 3G (UMTS)). The SGSN just relays the packets to the GGSN. The GGSN detects the PDP context and adds the appropriate header as in the first implementation. In addition, the GGSN modifies the application header (WTP) by adding an optional (proprietary) WTP field containing the mobile station terminal's MSISDN number or any other user alias name suitable for identifying the mobile station terminal. Note that the MSISDN number is known by the GGSN as it is part of the PDP context information. The GGSN forwards the WAP packets (which includes WTP header) in a UDP/IP packet to the destination WAP gateway (the destination address is the WAP gateway's IP address, the source address is the IP address allocated for all WAP PDP context). The WAP gateway uses the MSISDN or user alias name for user identification.

It should be noted that adding a WAP header in the GGSN is a proprietary feature which must be supported by the accessed WAP gateway as well.

Thus, it is to be noted that with the present invention an improvement can be achieved such as to enable the GGSN to spread traffic load over many WAP gateways. Also, an external database for subscriber identification is no longer necessary. The solution solves possible problems with network address translators NAT between GGSN and a WAP gateway. Also, by virtue of the present invention, a new proprietary feature in the protocol stack implementation of the WAP gateway is to be introduced.

Heretofore, possible implementations of the GGSN as a gateway note of the packet data network have been described.

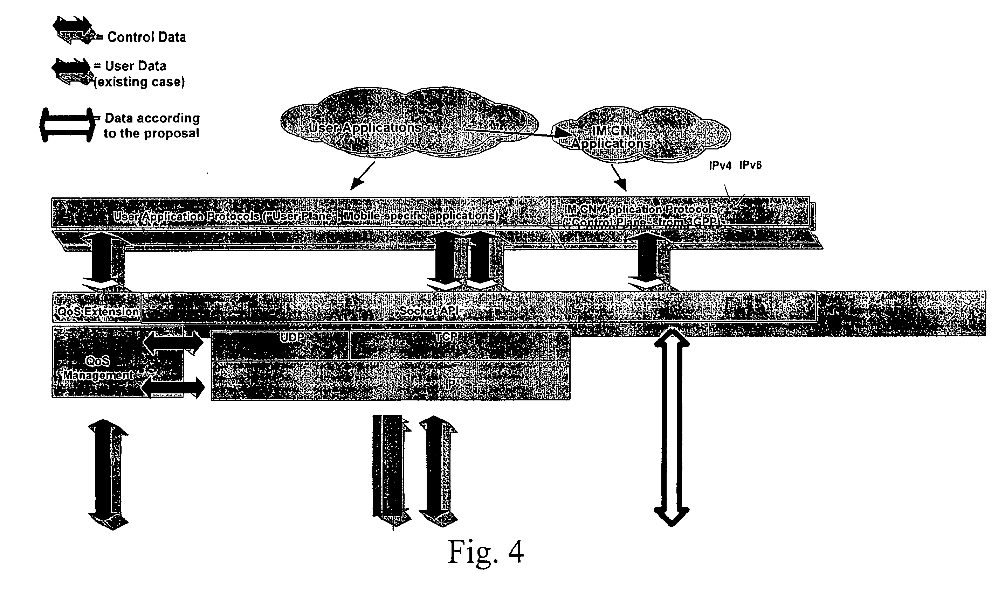

Subsequently, a possible implementation of a mobile station terminal communicating via the first packet data network with a second packet data network will be described. Such a possible implementation is shown in Fig. 4.

Fig. 4 represents the mobile station terminal in terms of the protocol stacks used. Note that all protocol stacks shown will access the packet domain bearer layer (not shown) on the "bottom" of Fig. 4. The terminal as shown in Fig. 4 is represented with reference to SIP signaling, but is likewise applicable for WAP or other service types and/or applications. Roughly spoken, the mobile station terminals protocol layer stack can be divided in two major parts: a right hand part below the "cloud" denoted IM CN applications, and a left hand part. The left hand part protocol layer stack includes UDP/TCP and IP protocol layers, whereas these layers are not present in the right hand part. It is to be noted, that the internal SIP signaling stack is referred to as IM CN application protocol (IP Multimedia Core Network application protocol). Thus, depending on the user applications, the IM CN application protocol generates the SIP message (or WAP message) and passes it to the socket API (application programming interface) indicating that this is intended for a PDP context with a PDP-type of "SIP signaling for VoIP". The socket API then relays the information directly to the packet domain bearer (not shown) on the "bottom" of the protocol stack. Thus, this packet data transmission from the socket API to the packet domain bearer "bypasses" UDP/TCP and IP protocol layers as these are removed for this service type. In the other case, i.e. the user applications yield a "normal" service type for which UDP/TCP and IP protocol layers are not to be removed, the user applications access the user application protocols on the left hand part of the illustrated protocol layer stack and the mobile station terminal transmits these packet data as normal, which means also involving UDP/TCP and IP protocol layers. Thus, dependent on the service type of the application, at least some of the protocol layers are selectively removed or not.

Another implementation for the mobile station terminal could reside in that the socket API first adds SIP over UDP/IP and then that a removing functional part of the UMTS layer again removes it. This, however, is not shown in Fig. 4.

As mentioned earlier above, according to the present invention, header information is selectively added/removed and correspondingly, protocol layers are added to/removed from the protocol stack dependent on a specific service type.

In order to make header removal in the GGSN gateway network node more generic, this could already be indicated at PDP context activation, for example by using a new information field: "GGSN header removal requested". For such a generic indication, a new parameter could be introduced or an already existing parameter (for example a quality of service parameter) could be used.

In addition, the MS also indicates to the GGSN how to perform header by indicating the following information in the PDP context activation request:
* the Protocol to be used for sending
   - Ipv4/UDP: GGSN will include the Application packet in a Ipv4/UDP packet
   - Ipv6/UDP: GGSN will include the Application packet in a Ipv6/UDP packet
   - Ipv4/TCP: GGSN will include the Application packet in a Ipv4/TCP packet
   - Ipv6/TCP: GGSN will include the Application packet in a Ipv6/TCP packet

   Note that one alternative is to omit this field, so that UDP is always used and the PDP type indicates IPv6 or Ipv4
   Note that other protocols may be indicated such as L2TP/PPP...
* Port number to be used for sending
   The use of this port is to limit the need of GGSN to know about application protocol. So this field indicates to GGSN if a fixed UDP port is to be used (including the value) or if the UDP port needs to be selected from a certain range.
* Destination address type
   This indicate if the address is a logical name, an IPv6 or Ipv4 address
   Note alternatively, this information could be derived from the TFT if the MS indicates the destination address to which to restrict the traffic for this PDP.
* Service type
   Note that this field could be omitted as this generic solution does not need GGSN to interpret application protocol or to apply configured action.

In this proposal the PDP address (i.e. terminal address) type is indicated by the field PDP type.

All these parameter may be coded as optional so that a GGSN not supporting this function would ignore this field. But a GGSN supporting generic header removal would indicate it with a new parameter (header removal activated) in the PDP context response message.

Then, the mobile station terminal would already send header removal request if it support the function and activate header removal if GGSN confirms its support.

For header removal / addition, the header information has to be signaled from the mobile station terminal to the GGSN and vice versa, depending on uplink and/or downlink transmission. The header information could be carried to the GGSN and/or to the mobile station terminal using traffic flow templates TFT. In this case, the mobile station terminal must set the required parameters in the traffic flow template (for example destination address, destination port, and so on). If also headers other than IP/TCP/UDP are removed, the mobile station terminal has to send additional protocol specific header information at the PDP context activation to the gateway GPRS support note (for example RTP (real time protocol) header information in case of RTP/UDP/IP header removal).

A "GGSN header removal used" indication could also be added to call detail records CDRs (at least to the call detail records created by the GGSN). Thus, GGSN header removal, i.e. removing of protocol layer headers at the GGSN, could be seen as an additional service providing cost savings for the user. With GGSN header removal, the user saves some money, because some of the actual user data is not charged. In addition, the functionality of the GGSN increases. That is, if the operator wants to take this into account in billing, the "GGSN header removal used" indication is needed in call detail records.

Also end-to-end ciphering (for example the IP security protocol IPSec) is an issue in header removal. If IPSec is used, only IP header (and possibly ESP (encapsulation security payload)) may be removed and reconstructed. Other headers such as TCP and UDP are ciphered. An enhancement could for the mobile station terminal reside in indicating the header removal level requested (for example IP header removal, IP/TCP header removal, IP/UDP header removal, IP/UDP/RDP header removal, or the like). A mobile station terminal using IPSec could request the IP header removal.

Also, with the header removal level indication, the GGSN knows which headers have to be reconstructed for uplink packets.

Of course, the knowledge concerning the headers may be derived by checking which information the mobile station sends to be used for header reconstruction. But if the mobile station terminal does not send anything, but the GGSN determines this information by itself, a knowledge of the required header removal level may not be possible without the header removal level indication.

Currently, header adaptation is implemented as the radio access network functionality. In case of header removal being performed in the GGSN as a part of the core network, it is advantageous to indicate this to the radio access network. If the radio access network knows that only user data is transferred with different headers, there is no need to perform header adaptation in the radio access network. The SGSN could indicate to the radio access network if header removal is performed in the GGSN. If GGSN header removal is requested, the SGSN should only select such a GGSN supporting header removal, so that SGSN can indicate to the radio access network that "no header removal is required".

Thus, from the above it becomes clear that according to the present invention several different types of PDP contexts are enabled to be activated at the same time. According to the invention, an activation of a secondary context with a different PDP-type to be requested is allowed. The GGSN will only accept the request if it has the required capability. In addition, the GGSN performs some header removing in downlink direction and header adding in uplink direction for data packets belonging to this secondary PDP context (specific service type). Thus, in specific cases, at least a part of protocol layers stack such as for example the IP layer of the stack could be removed from the secondary context, thereby speeding up services and reducing signaling overhead. Nevertheless, there is no need to use a SIP stack and/or WAP stack always without IP, but only for specific services such as voice over IP signaling in 3GPP which benefit from the special treatment such as no charging. In order to be able to remove headers in downlink, the mobile station terminal must expressly know that the packets coming in are of a certain type. This information may be signaled to the mobile station terminal using traffic flow templates.

Also, with the present invention there exists the possibility to signal from the mobile station terminal the destination IP address as a part of the PDP context activation. However if no destination IP address is provided, the gateway could provide "automatic provisioning of a default application server (e.g. WAP gateway) when roaming across GPRS networks is possible. That is, if the terminal is related to a new GGSN, then this amounts to being automatically connected to an associated WAP gateway without any explicit provisioning. On roaming, by selecting the GGSN in the HPLMN (home public land mobile network), the mobile station keeps its home WAP service, whereas by selecting GGSN in VPLMN (visited public land mobile network), the mobile station terminal automatically uses local WAP services.

Accordingly, as described herein above, the present invention concerns a method for transmitting application packet data via a first packet data network between a terminal and a second packet data network, said application packet data being transmitted using an application protocol operated on top of a protocol stack, said protocol stack comprising plural individual stacked protocol layers adopted for said transmission within said first packet data network, wherein said application packet data are addressed to the terminal and distinguishable according to a service type implemented for said terminal using said application, the method comprising the steps of: detecting said service type, and dependent on the transmission direction of said application packet data, removing and/or adding at least one of said plural individual protocol layers for a specific one of detected service type. The present invention also concerns accordingly adapted terminals and network nodes.

Although the present invention has been described herein above with reference to its preferred embodiments, it should be understood that numerous modifications may be made thereto. It is intended that all such modifications fall within the scope of the appended claims.

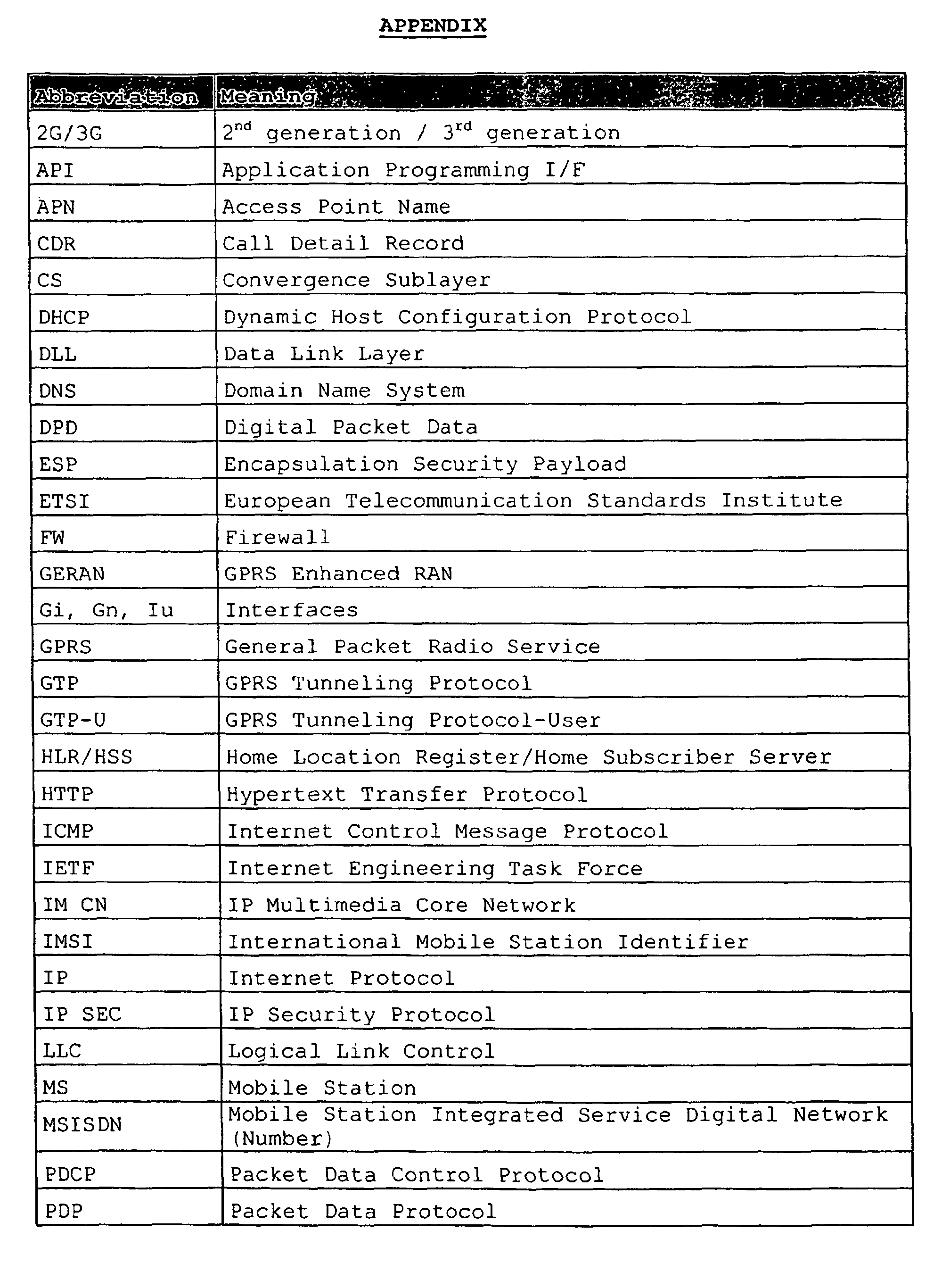

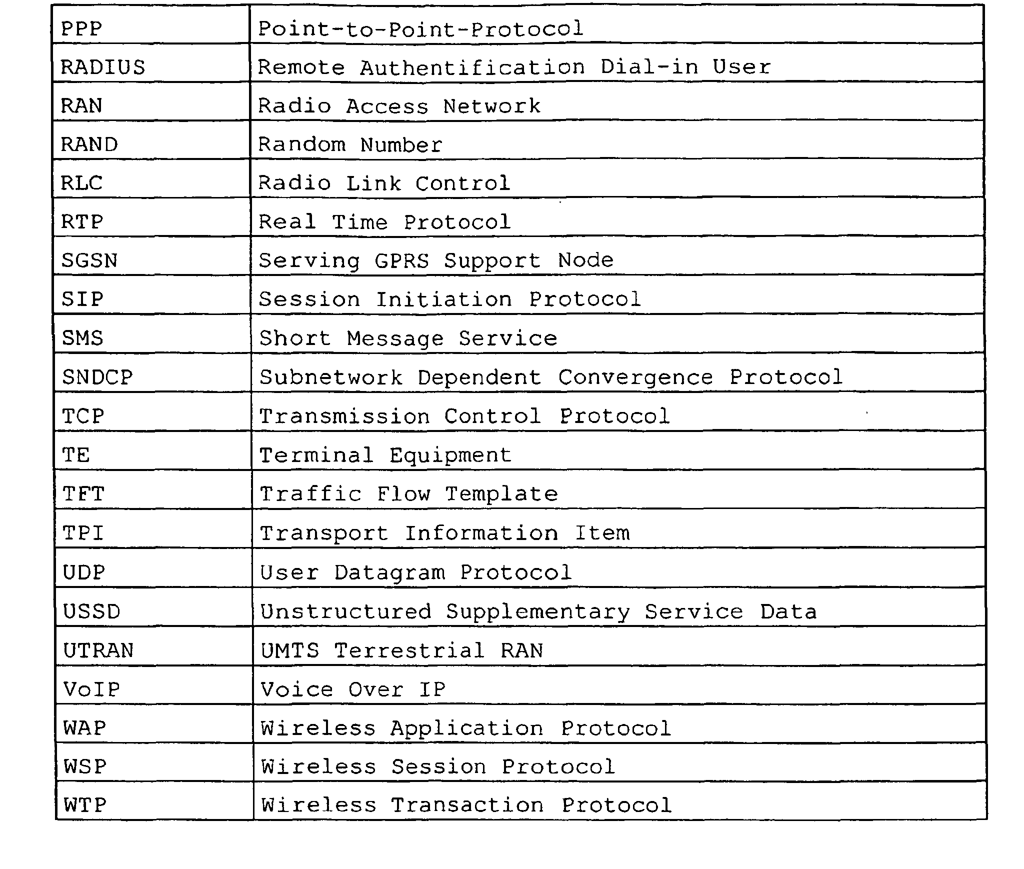

## Claims

1. A method for transmitting application packet data via a first packet data network between a terminal and a second packet data network,
said application packet data being transmitted using an application protocol operated on top of a protocol stack, said protocol stack comprising plural individual stacked protocol layers adopted for said transmission within said first packet data network,
wherein said application packet data are addressed to the terminal and distinguishable according to a service type implemented for said terminal using said application, **characterized in that the method comprises the steps of:**
detecting said service type, and
dependent on the transmission direction of said application packet data, removing and/or adding at least one of said plural individual protocol layers for a specific one of detected service type, and wherein
the service type of an application is distinguishable from a context defined for said terminal and application.

2. A method according to claim 1, wherein
removing and/or adding at least one of said plural individual protocol layers is accomplished by removing and/or adding header information related to said respective protocol layer.

3. A method according to claim 1 or 2, wherein
removing / adding at least one of said plural individual protocol layers is effected at a gateway node of said first packet data network to said second packet data network.

4. A method according to claim 3, wherein
in downlink transmission from said second packet data network towards said terminal, said at least one of said plural individual protocol layers is removed, and
in uplink transmission from said terminal towards said second packet data network, said at least one of said plural individual protocol layers is added.

5. A method according to claim 1 or 2, wherein
adding / removing at least one of said plural individual protocol layers is effected at said terminal communicating via said first packet data network with said second packet data network.

6. A method according to claim 5, wherein
in downlink transmission terminating at said terminal, said at least one of said plural individual protocol layers is added, and
in uplink transmission originating at said terminal, said at least one of said plural individual protocol layers is removed.

7. A method according to claim 1, wherein
the service type is indicated by the terminal to a gateway node.

8. A method according to claim 1, wherein
a context definition comprises service type , address information of a terminal for which said service is implemented, and a quality of service definition.

9. A method according to claims 1 or 8, wherein the context definition additionally comprises
filter information, application type information, destination address and type of header to be added.

10. A method according to any of the preceding claims, wherein
in case different applications in the terminal share the same address, the gateway maps downlink packets to the appropriate context using a filter mechanism.

11. A method according to any of the preceding claims, wherein
protocol headers to be added are determined from said context and/or configured information.

12. A gateway node of a first packet data network,
said gateway node being adapted to transmit application packet data between a terminal connectable to said first packet data network and a second packet data network) connectable to said packet data network,
said application packet data being transmitted using an application protocol operated on top of a protocol stack, said protocol stack comprising plural individual stacked protocol layers adopted for said transmission within said first packet data network,
wherein said application packet data are addressed to the terminal and distinguishable according to a service type implemented for said terminal using said application, **characterised in that** said gateway node comprises
detection means adapted to detect said service type, and
selection means adapted to selectively remove and/or add at least one of said plural individual protocol layers dependent on the transmission direction of said application packet data, for a specific one of detected service type, and wherein said detection means is adapted to distinguish the service type of an application from a context defined for said application.

13. A gateway node according to claim 12, wherein
said selection means is adapted to remove and/or add header information related to said respective protocol layer.

14. A gateway node according to claim 12 or 13, wherein said selection means is adapted
to remove said at least one of said plural individual protocol layers in downlink transmission from said second packet data network towards said terminal, and
to add said at least one of said plural individual protocol layers in uplink transmission from said terminal towards said second packet data network.

15. A gateway node according to claim 12 or 13, wherein
said selection means is adapted to add protocol headers based on information from said context and/or configured information.

16. A gateway node according to claim 14 or 15, wherein
said detection means is adapted to select the appropriate context using a filter mechanism if different applications in the terminal share the same address.

17. A gateway node according to claim 12, wherein
a context definition comprises application type information, address information of a terminal for which said service is implemented, and a quality of service definition.

18. A gateway node according to claims 12, and 16 to 17, wherein the context definition additionally comprises
filter information, application type information, destination address and type of header to be added.

19. A terminal
connectable to a first packet data network and
adapted to transmit application packet data via said first packet data network to a second packet data network connectable to said first packet data network and to receive application packet data via said first packet data network from said second packet data network,
said application packet data being transmitted using an application protocol operated on top of a protocol stack, said protocol stack comprising plural individual stacked protocol layers adopted for said transmission within said first packet data network,
wherein said application packet data are addressed to the terminal and distinguishable according to a service type implemented for said terminal using said application, **characterised in that** said terminal comprises
detection means adapted to detect said service type,
activation means to establish a connection to a gateway node and
selection means adapted to selectively remove and/or add at least one of said plural individual protocol layers dependent on the transmission direction of said application packet data, for a specific one of detected service type, and
wherein said detection means is adapted to distinguish the service type of an application from a context defined for said application.

20. A terminal according to claim 19, wherein
said detection means is adapted to select the appropriate context if different applications in the terminal share the same address.

21. A terminal according to claim 19, wherein
said activation means is adapted to establish one or many contexts in a gateway node.

22. A terminal according to claim 19, wherein
said selection means is adapted to remove and/or add header information related to said respective protocol layer.

23. A terminal according to claim 19 or 22, wherein said selection means is adapted
to add said at least one of said plural individual protocol layers in downlink transmission terminating at said terminal, and
to remove said at least one of said plural individual protocol layers in uplink transmission originating at said terminal.

24. A terminal according to claim 19, wherein
a context definition comprises service type, address information of a terminal for which said service is implemented, and a quality of service definition.

25. A terminal according to claim 19, wherein
the context definition further comprises filter information, destination address, application type information and type of header to be added.

## Patentansprüche

1. Verfahren zum Übertragen von Anwendungspaketdaten über ein erstes Paketdatennetzwerk zwischen einem Endgerät und einem zweiten Paketdatennetzwerk,
wobei die Anwendungspaketdaten unter Verwendung eines Anwendungsprotokolls übertragen werden, das am oberen Ende eines Protokollstapels betrieben wird, wobei der Protokollstapel eine Mehrzahl einzelner, gestapelter Protokollschichten aufweist, die für die Übertragung innerhalb des ersten Paketdatennetzwerks eingesetzt werden,
wobei die Anwendungspaketdaten an das Endgerät adressiert und gemäß einem Diensttyp unterscheidbar sind, der für das die Anwendung verwendende Endgerät implementiert ist,
**dadurch gekennzeichnet, dass** das Verfahren die Schritte aufweist:
Erfassen des Diensttyps, und
Entfernen und/oder Hinzufügen von mindestens einer der Mehrzahl einzelner Protokollschichten für einen speziellen erfassten Diensttyp abhängig von der Übertragungsrichtung der Anwendungspaketdaten, und wobei
der Diensttyp einer Anwendung von einem für das Endgerät und die Anwendung definierten Kontext unterscheidbar ist.

2. Verfahren gemäß Anspruch 1, bei dem
Entfernen und/oder Hinzufügen von mindestens einer der Mehrzahl einzelner Protokollschichten durch Entfernen und/oder Hinzufügen von Nachrichtenkopfinformationen in Bezug auf die jeweilige Protokollschicht durchgeführt wird.

3. Verfahren gemäß Anspruch 1 oder 2, bei dem
Entfernen/Hinzufügen von mindestens einer der Mehrzahl einzelner Protokollschichten an einem Netzübergangsnoten des ersten Paketdatennetzwerks zum zweiten Paketdatennetzwerk bewirkt wird.

4. Verfahren gemäß Anspruch 3, bei dem
die mindestens eine der Mehrzahl einzelner Protokollschichten bei einer Abwärtsstreckenübertragung vom zweiten Paketdatennetzwerk zum Endgerät entfernt wird, und
die mindestens eine der Mehrzahl einzelner Protokollschichten bei einer Aufwärtsstreckenübertragung vom Endgerät zum zweiten Paketdatennetzwerk hinzugefügt wird.

5. Verfahren gemäß Anspruch 1 oder 2, bei dem
Hinzufügen/Entfernen von mindestens einer der Mehrzahl einzelner Protokollschichten an dem Endgerät bewirkt wird, das über das erste Paketdatennetzwerk mit dem zweiten Paketdatennetzwerk kommuniziert.

6. Verfahren gemäß Anspruch 5, bei dem
die mindestens eine der Mehrzahl einzelner Protokollschichten bei einer Abwärtsstreckenübertragung, die an dem Endgerät abschließt, hinzugefügt wird, und
die mindestens eine der Mehrzahl einzelner Protokollschichten bei einer Aufwärtsstreckenübertragung, die von dem Endgerät ausgeht, entfernt wird.

7. Verfahren gemäß Anspruch 1, bei dem
der Diensttyp vom Endgerät an einen Netzübergangsknoten angegeben wird.

8. Verfahren gemäß Anspruch 1, bei dem
eine Kontextdefinition Diensttyp, Adressinformationen eines Endgeräts, für das der Dienst implementiert ist, und eine Dienstgütedefinition aufweist.

9. Verfahren gemäß Anspruch 1 oder 8, bei dem
die Kontextdefinition zusätzlich Filterinformationen, Anwendungstypinformationen, Zieladresse und Typ eines hinzuzufügenden Nachrichtenkopfes aufweist.

10. Verfahren gemäß einem der vorhergehenden Ansprüche, bei dem
der Netzübergang Abwärtsstreckenpakete unter Verwendung eines Filtermechanismus auf den passenden Kontext abbildet, falls sich unterschiedliche Anwendungen im Endgerät die gleiche Adresse teilen.

11. Verfahren gemäß einem der vorhergehenden Ansprüche, bei dem
hinzuzufügende Protokollnachrichtenköpfe aus dem Kontext und/oder konfigurierten Informationen bestimmt werden.

12. Netzübergangsknoten eines ersten Paketdatennetzwerks, wobei der Netzübergangsknoten angepasst ist, Anwendungspaketdaten zwischen einem Endgerät, das mit dem ersten Paketdatennetzwerk verbindbar ist, und einem zweiten Paketdatennetzwerk zu übertragen, das mit dem besagten Paketdatennetzwerk verbindbar ist,
wobei die Anwendungspaketdaten unter Verwendung eines Anwendungsprotokolls übertragen werden, das am oberen Ende eines Protokollstapels betrieben wird, wobei der Protokollstapel eine Mehrzahl einzelner, gestapelter Protokollschichten aufweist, die für die Übertragung innerhalb des ersten Paketdatennetzwerks eingesetzt werden,
wobei die Anwendungspaketdaten an das Endgerät adressiert und gemäß einem Diensttyp unterscheidbar sind, der für das die Anwendung verwendende Endgerät implementiert ist,
**dadurch gekennzeichnet, dass** der Netzübergangsknoten aufweist:
eine Erfassungseinrichtung, die zum Erfassen des Diensttyps angepasst ist, und
eine Auswahleinrichtung, die zum selektiven Entfernen und/oder Hinzufügen von mindestens einer der Mehrzahl einzelner Protokollschichten für einen speziellen erfassten Diensttyp abhängig von der Übertragungsrichtung der Anwendungspaketdaten angepasst ist, und wobei die Erfassungseinrichtung angepasst ist, den Diensttyp einer Anwendung von einem für die Anwendung definierten Kontext zu unterscheiden.

13. Netzübergangsknoten gemäß Anspruch 12, bei dem die Auswahleinrichtung angepasst ist, Nachrichtenkopfinformationen in Bezug auf die jeweilige Protokollschicht zu entfernen und/oder hinzuzufügen.

14. Netzübergangsknoten gemäß Anspruch 12 oder 13, bei dem die Auswahleinrichtung angepasst ist zum
Entfernen der mindestens einen der Mehrzahl einzelner Protokollschichten bei einer Abwärtsstreckenübertragung vom zweiten Paketdatennetzwerk zum Endgerät, und
Hinzufügen der mindestens einen der Mehrzahl einzelner Protokollschichten bei einer Aufwärtsstreckenübertragung vom Endgerät zum zweiten Paketdatennetzwerk.

15. Netzübergangsknoten gemäß Anspruch 12 oder 13, bei dem
die Auswahleinrichtung angepasst ist, Protokollnachrichtenköpfe basierend auf Informationen aus dem Kontext und/oder konfigurierten Informationen hinzuzufügen.

16. Netzübergangsknoten gemäß Anspruch 14 oder 15, bei dem
die Erfassungseinrichtung angepasst ist, den passenden Kontext unter Verwendung eines Filtermechanismus auszuwählen, falls sich unterschiedliche Anwendungen im Endgerät die gleiche Adresse teilen.

17. Netzübergangsknoten gemäß Anspruch 12, bei dem
eine Kontextdefinition Anwendungstypinformationen, Adressinformationen eines Endgeräts, für das der Dienst implementiert ist, und eine Dienstgütedefinition aufweist.

18. Netzübergangsknoten gemäß einem der Ansprüche 12 und 16 bis 17, bei dem die Kontextdefinition zusätzlich Filterinformationen, Anwendungstypinformationen, Zieladresse und Typ eines hinzuzufügenden Nachrichtenkopfes aufweist.

19. Endgerät, das mit einem ersten Paketdatennetzwerk verbindbar und angepasst ist, Anwendungspaketdaten über das erste Paketdatennetzwerk an ein zweites Paketdatennetzwerk zu übertragen, das mit dem ersten Paketdatennetzwerk verbindbar ist, und Anwendungspaketdaten von dem zweiten Paketdatennetzwerk über das erste Paketdatennetzwerk zu empfangen,
wobei die Anwendungspaketdaten unter Verwendung eines Anwendungsprotokolls übertragen werden, das am oberen Ende eines Protokollstapels betrieben wird, wobei der Protokollstapel eine Mehrzahl einzelner, gestapelter Protokollschichten aufweist, die für die Übertragung innerhalb des ersten Paketdatennetzwerks eingesetzt werden,
wobei die Anwendungspaketdaten an das Endgerät adressiert und gemäß einem Diensttyp unterscheidbar sind, der für das die Anwendung verwendende Endgerät implementiert ist,
**dadurch gekennzeichnet, dass** das Endgerät aufweist:
eine Erfassungseinrichtung, die zum Erfassen des Diensttyps angepasst ist,
eine Aktivierungseinrichtung zum Einrichten einer Verbindung zu einem Netzübergangsknoten, und
eine Auswahleinrichtung, die zum selektiven Entfernen und/oder Hinzufügen von mindestens einer der Mehrzahl einzelner Protokollschichten für einen speziellen erfassten Diensttyp abhängig von der Übertragungsrichtung der Anwendungspaketdaten angepasst ist, und
wobei die Erfassungseinrichtung angepasst ist, den Diensttyp einer Anwendung von einem für die Anwendung definierten Kontext zu unterscheiden.

20. Endgerät gemäß Anspruch 19, bei dem
die Erfassungseinrichtung angepasst ist, den passenden Kontext auszuwählen, falls sich unterschiedliche Anwendungen im Endgerät die gleiche Adresse teilen.

21. Endgerät gemäß Anspruch 19, bei dem
die Aktivierungseinrichtung angepasst ist, einen oder viele Kontexte in einem Netzübergangsknoten einzurichten.

22. Endgerät gemäß Anspruch 19, bei dem
die Auswahleinrichtung angepasst ist, Nachrichtenkopfinformationen in Bezug auf die jeweilige Protokollschicht zu entfernen und/oder hinzuzufügen.

23. Endgerät gemäß Anspruch 19 oder 22, bei dem die Auswahleinrichtung angepasst ist zum
Hinzufügen der mindestens einen der Mehrzahl einzelner Protokollschichten bei einer Abwärtsstreckenübertragung, die an dem Endgerät abschließt, und
Entfernen der mindestens einen der Mehrzahl einzelner Protokollschichten bei einer Aufwärtsstreckenübertragung, die von dem Endgerät ausgeht.

24. Endgerät gemäß Anspruch 19, bei dem
eine Kontextdefinition Diensttyp, Adressinformationen eines Endgeräts, für das der Dienst implementiert ist, und eine Dienstgütedefinition aufweist.

25. Endgerät gemäß Anspruch 19, bei dem
die Kontextdefinition zusätzlich Filterinformationen, Zieladresse, Anwendungstypinformationen und Typ eines hinzuzufügenden Nachrichtenkopfes aufweist.

## Revendications

1. Procédé permettant la transmission de données par paquets d'application par l'intermédiaire d'un premier réseau de données par paquets entre un terminal et
un deuxième réseau de données par paquets,
lesdites données par paquets d'application étant transmises en utilisant un protocole d'application
fonctionnant au dessus d'une pile de protocole, ladite pile de protocole comprenant
une pluralité de couches individuelles empilées de protocole
choisies pour ladite transmission
dans ledit premier réseau de données par paquets, où
lesdites données par paquets d'application sont adressées au terminal et sont distinguables selon un type de service mis en application pour ledit terminal en utilisant ladite application, **caractérisé en ce que** le procédé comprend les étapes consistant à :
détecter ledit type de service, et
suivant la direction de transmission desdites données par paquets d'application, retirer et/ou ajouter au moins une de ladite pluralité de couches individuelles de protocole pour un type spécifique de service détecté, et où
le type de service d'une application est distinguable d'un contexte défini pour lesdits terminal et application.

2. Procédé selon la revendication 1, où
retirer et/ou ajouter au moins une de ladite pluralité de couches individuelles de protocole consiste à retirer et/ou ajouter une information d'en-tête associée à la dite couche de protocole respective.

3. Procédé selon la revendication 1 ou 2, où l'action de
retirer/ajouter au moins une de ladite pluralité de couches individuelles de protocole est effectuée à un noeud de passerelle dudit premier réseau de données par paquets au dit deuxième réseau de données par paquets.

4. Procédé selon la revendication 3, où
dans la transmission descendante dudit deuxième réseau de données par paquets vers ledit terminal, au moins une de ladite pluralité de couches individuelles de protocole est retirée, et
dans la transmission montante dudit terminal vers ledit deuxième réseau de données par paquets, au moins une de ladite pluralité de couches individuelles de protocole est ajoutée.

5. Procédé selon la revendication 1 ou 2, où l'action d'
ajouter/retirer au moins une de ladite pluralité de couches individuelles de protocole est effectuée audit terminal communiquant par l'intermédiaire dudit premier réseau de données par paquets avec ledit deuxième réseau de données par paquets.

6. Procédé selon la revendication 5, où
dans la transmission descendante se terminant audit terminal, au moins une de ladite pluralité de couches individuelles de protocole est ajoutée, et
dans la transmission montante commençant audit terminal, au moins une de ladite pluralité de couches individuelles de protocole est retirée.

7. Procédé selon la revendication 1, où
le type de service est indiqué par le terminal à un noeud de passerelle.

8. Procédé selon la revendication 1, où
une définition de contexte comporte le type de service, l'information d'adresse d'un terminal pour lequel ledit service est mis en application, et une qualité de définition de service.

9. Procédé selon les revendications 1 ou 8, où la définition de contexte comporte en plus
l'information de filtrage, l'information de type d'application, l'adresse de destination et le type d'en-tête à ajouter.

10. Procédé selon l'une quelconque des revendications précédentes, où
si des applications différentes dans le terminal partagent la même adresse, la passerelle affecte les paquets de la voix descendante au contexte approprié en utilisant un mécanisme de filtre.

11. Procédé selon l'une quelconque des revendications précédentes, où des en-têtes de protocole devant être ajoutés sont déterminés à partir dudit contexte et/ou d'information configurée.

12. Noeud de passerelle d'un premier réseau de données par paquets, ledit noeud de passerelle étant adapté pour transmettre des données par paquets d'application entre un terminal connectable au dit premier réseau de données par paquets et un deuxième réseau de données de
paquets connectable au dit réseau de données par paquets, lesdites données par paquets d'application étant transmises en utilisant un protocole d'application
fonctionnant au dessus d'une pile de protocole, ladite pile de protocole comprenant
une pluralité de couches individuelles empilées de protocole
choisies pour ladite transmission
dans ledit premier réseau de données par paquets, où lesdites données par paquets d'application sont adressées au terminal et sont distinguables selon un type de service mis en application pour ledit terminal en utilisant ladite application, **caractérisé en ce que**
ledit noeud de passerelle comporte
des moyens de détection adaptés pour détecter ledit type de service, et
des moyens de sélection adaptés pour sélectivement retirer et/ou ajouter au moins une de ladite pluralité de couches individuelles de protocole dépendante de la direction de transmission desdites données par paquets d'application, pour un type spécifique de service détecté, et où lesdits moyens de détection sont adaptés pour distinguer le type de service d'une application d'un contexte défini pour ladite application.

13. Noeud de passerelle selon la revendication 12, où lesdits moyens de sélection sont adaptés pour retirer et/ou ajouter l'information d'en-tête relative à ladite couche respective de protocole.

14. Noeud de passerelle selon la revendication 12 ou 13, où lesdits moyens de sélection sont adaptés
pour retirer ladite au moins une de ladite pluralité de couches individuelles de protocole dans la transmission descendante dudit deuxième réseau de données par paquets vers ledit terminal, et
pour ajouter ladite au moins une de ladite pluralité de couches individuelles de protocole dans la transmission montante dudit terminal vers ledit deuxième réseau de données par paquets.

15. Noeud de passerelle selon la revendication 12 ou 13, où
lesdits moyens de sélection sont adaptés pour ajouter des en-têtes de protocole basés sur l'information dudit contexte et/ou l'information configurée.

16. Noeud de passerelle selon la revendication 14 ou 15, où
lesdits moyens de détection sont adaptés pour choisir le contexte approprié en utilisant un mécanisme de filtre si les différentes applications dans le terminal partagent la même adresse.

17. Noeud de passerelle selon la revendication 12, où
une définition de contexte comporte le type de l'information d'application, l'information d'adresse d'un terminal pour lequel ledit service est mis en application, et une qualité de définition de service.

18. Noeud de passerelle selon les revendications 12, et 16 à 17, où la définition de contexte comporte en plus
l'information de filtre, l'information de type d'application, l'adresse de destination et le type d'en-tête à ajouter.

19. Terminal
connectable à un premier réseau de données par paquets et
adapté pour transmettre des données par paquets d'application par l'intermédiaire dudit premier réseau de données par paquets à un deuxième réseau de données par paquets connectable audit premier réseau de données par paquets et pour recevoir des données par paquets d'application par l'intermédiaire dudit premier réseau de données par paquets dudit deuxième réseau de données par paquets, lesdites données par paquets d'application étant transmises en utilisant un protocole d'application
fonctionnant au dessus d'une pile de protocole, ladite pile de protocole comprenant
une pluralité de couches individuelles empilées de protocole
choisies pour ladite transmission
dans ledit premier réseau de données par paquets, où lesdites données par paquets d'application sont adressées au terminal et sont distinguables selon un type de service mis en application pour ledit terminal en utilisant ladite application, **caractérisé en ce que** ledit terminal comporte
des moyens de détection adaptés pour détecter ledit type de service,
des moyens de lancement pour établir une connexion à un noeud de passerelle
et
des moyens de sélection adaptés pour sélectivement retirer et/ou ajouter au moins une de ladite pluralité de couches individuelles de protocole dépendant de la direction de transmission desdites données par paquets d'application, pour un type spécifique de service détecté, et
où lesdits moyens de détection sont adaptés pour distinguer le type de service d'une application d'un contexte défmi pour ladite application.

20. Terminal selon la revendication 19, où
lesdits moyens de détection sont adaptés pour choisir le contexte approprié si les différentes applications dans le terminal partagent la même adresse.

21. Terminal selon la revendication 19, où lesdits moyens de lancement sont adaptés pour établir un ou un grand nombre de contextes dans un noeud de passerelle.

22. Terminal selon la revendication 19, où lesdits moyens de sélection sont adaptés pour retirer et/ou ajouter l'information d'en-tête relative à la dite couche du protocole respectif.

23. Terminal selon la revendication 19 ou 22, où lesdits moyens de sélection sont adaptés
pour ajouter la dite au moins une de ladite pluralité de couches individuelles de protocole dans la transmission descendante se terminant audit terminal, et
pour retirer la dite au moins une de ladite pluralité de couches individuelles de protocole de la transmission montante commençant audit terminal.

24. Terminal selon la revendication 19, où
une définition de contexte comporte le type de service, l'information d'adresse d'un terminal pour lequel ledit service est mis en application, et une qualité de définition de service.

25. Terminal selon la revendication 19, où la définition de contexte comprend en outre l'information de filtre, l'adresse de destination, l'information du type d'application et le type d'en-tête à ajouter.
